# EUROPÄISCHE PATENTANMELDUNG

(11) **EP 1 172 165 A1**
(43) Veröffentlichungstag der Anmeldung: **16.01.2002**
(21) Anmeldenummer: 01113863.3
(22) Anmeldetag: 07.06.2001
(51) Int. Cl.: B22F 5/10

(54) **Verfahren zum Herstellen von Kühlkanälen in betrieblich thermisch belasteten Formgebungswerkzeugen und zugehöriges Formgebungswerkzeug**

(30) Priorität: 15.07.2000 DE 10034506
(71) Anmelder: Schott Glas, 55122 Mainz (DE); CARL-ZEISS-STIFTUNG trading as SCHOTT GLAS, 55122 Mainz (DE)
(72) Erfinder: Herzbach, Lars Christian, 64331 Weiterstadt (DE); Kemler, Franz-Rudolf, 55270 Zornheim (DE); Thiel, Steffen, 55286 Wörrstadt (DE)
(74) Vertreter: Fuchs Mehler Weiss & Fritzsche

(57) **Zusammenfassung**

Derartige Formgebungswerkzeuge werden typischerweise zur Erzeugung von Glas- oder Kunststoff-Produkten mit vorgegebenen Formen eingesetzt. Da sie thermisch durch das erhitzte Substrat hochbelastet sind, und schnell abkühlen müssen, damit kleine Taktzeiten und damit im wirtschaftlichen Interesse eine hohe Ausbeute erzielbar ist, weisen sie Kühlkanäle auf, die beim Stand der Technik typischerweise durch Kühlbohrungen gebildet sind.

Erfindungsgemäß wird das Formgebungswerkzeug mit relativ einfachem Bearbeitungsaufwand durch heißisostatisches Verpressen (HIP-Prozeß) mit Kühlkanälen versehen, indem in einer Kapsel (4) zwei Werkstoffsysteme (6,7) vakuumdicht eingeschlossen sind und die Grenzfläche (5) zwischen ihnen entsprechend der Kontur der Kühlkanäle (8) geometrisch konturiert ist, wobei das Werkstoff-System (6), das den späteren Kühlkanal (8) ausfüllt, vorzugsweise ein lösliches Salz ist, das nach der Endbearbeitung des durch den HIP-Prozeß erzeugten, das Formgebungswerkzeug bildenden Verbundkörpers, herausgelöst wird.

## Beschreibung

Die Erfindung betrifft ein Verfahren zum Herstellen von Kühlkanälen in betrieblich thermisch belasteten Formgebungswerkzeugen.

Die Erfindung betrifft ferner ein mit mindestens einem Kühlkanal versehenes, betrieblich thermisch belastetes Formgebungswerkzeug.

Bei der Glas- und Kunststoffverarbeitung werden zur Erzeugung von Glas- oder Kunststoffprodukten mit vorgegebenen Formen Formgebungswerkzeuge eingesetzt, die typischerweise bei der Formgebung des heißen Glases bzw. Kunststoffes thermisch stark belastet werden. Um diese thermische Belastung in Grenzen zu halten, und um das Formgebungswerkzeug schneller abzukühlen, um dadurch geringere Taktzeiten, d.h. eine höhere Ausbeute zu erzielen, sind die Formgebungswerkzeuge mit Kühlkanälen, durch die Kühlwasser oder Kühlluft strömt und damit die Temperatur des Formgebungswerkzeuges absenkt, und/oder mit gut leitenden Materialien, z.B. Kupfer, die die Wärme schneller abführen, versehen.

Derzeit werden im Formenbau Kühlkanäle für Luft oder Wasserkühlung typischerweise durch Bohrungen, insbesondere Tieflochbohrungen, hergestellt. Bei dreidimensionalen Kühlkanälen müssen dabei die Kühlkanäle vorher in Form-Halbschalen vorgearbeitet werden. Diese Halbschalen werden anschließend durch z.B. Schweißen oder Löten verbunden und somit die Form, das Formgebungswerkzeug, fertiggestellt. Diese Herstellungsmethode ist zum Teil mit großem Aufwand verbunden, da die Bearbeitung aufwendig ist und damit der Zeitaufwand hoch ist. Zudem ist die Anschaffung geeigneter Maschinen und Werkzeuge zur Formbearbeitung ebenfalls mit hohen Kosten verbunden.

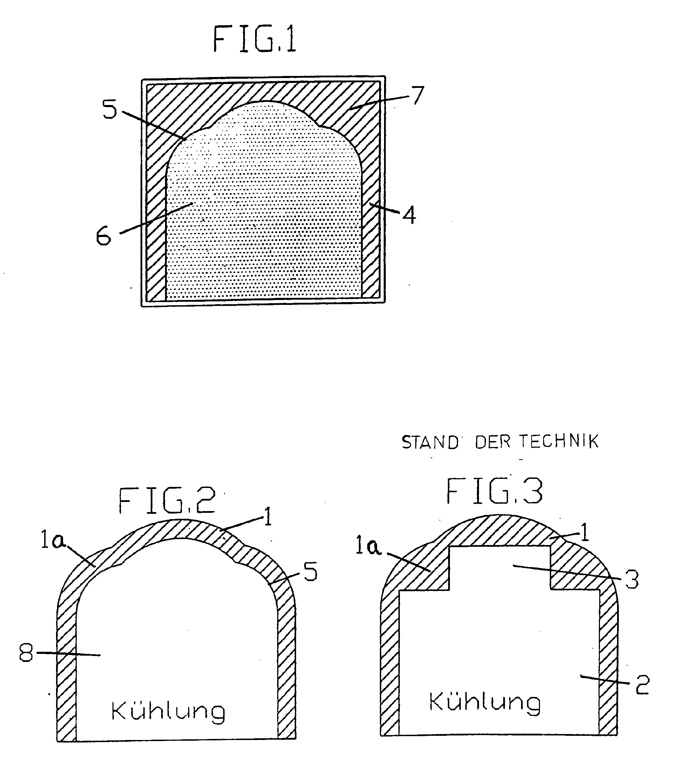

Gebohrte Kühlkanäle haben zudem, wie die Fig. 3 zeigt, wegen ihrer Zweidimensionalität den Nachteil, daß die Kühlleistung nicht optimiert werden kann. An dem Übergang 1a in dem Formgebungswerkzeug 1 zwischen den Bohrungen 2,3 mit unterschiedlichen Durchmessern ist die Wandstärke des Formgebungswerkzeuges relativ dick, so daß an dieser Stelle die Kühlleistung gering ist.

Der Erfindung liegt die Aufgabe zugrunde, ein Verfahren zum Herstellen von Kühlkanälen in betrieblich thermisch belasteten Formgebungswerkzeugen zu schaffen, das auch bei komplexen Kühlsystemen auch ohne vorhergehendes Bearbeiten von Halbschalen eine signifikante Reduzierung des Bearbeitungsaufwandes ermöglicht, die Bandbreite der zu realisierenden komplexen Kühlsysteme erweitert und gegenüber gebohrten Kühlkanälen auch eine ortsabhängige Optimierung der Kühlleistung erlaubt. Die Lösung dieser Aufgabe gelingt erfindungsgemäß mit den Schritten:
- Festlegen der Kontur und Lage des Kühlsystems im Formgebungswerkzeug entsprechend der geforderten, ortsabhängigen Kühlleistung durch eine entsprechend vorgegebene konturierte Grenzfläche zwischen mindestens zwei Werkstoffsystemen innerhalb einer vakuumdicht verschließbaren Kapsel, wobei das den Raum der Kühlkanäle einnehmende Werkstoffsystem ein temperaturbeständiger, löslicher Füllstoff ist,
- Ausüben des Verfahrens des heißisostatischen Pressens zur Erzeugung eines Verbundkörpers innerhalb der Kapsel unter lösbarem Einschließen des Füllstoffes,
- Bearbeiten des Verbundkörpers auf die geforderte formgebende Endkontur des Formgebungswerkzeuges, und
- Herauslösen des Füllstoffes aus dem Verbundkkörper unter Ausbildung des Kühlkanales.

Durch das erfindungsgemäße Verfahren können neben einfachen Kühlsystemen vor allem komplex geformte Kühlkanalstrukturen bereitgestellt werden. Die Bandbreite des möglichen Kühlkanalstrukturkörpers ist dabei sehr hoch. Ein vorheriges Einarbeiten der Kühlstrukturen in Halbformen und ein anschließendes Zusammenbauen der Form ist dabei nicht mehr nötig. Dadurch kann der Bearbeitungsaufwand signifikant gesenkt werden. Durch einen entsprechend vorgegebenen Verlauf der Grenzfläche zwischen dem Füllstoff und dem ihn umgebenden Werkstoffsystem kann auch die Kühlleistung ortsabhängig optimiert werden.

Das Verfahren des "heißisostatischen Pressens", typischerweise abgekürzt "HIP-Prozeß", ist in der Fachtechnik hinlänglich bekannt und braucht daher hier nicht näher beschrieben zu werden. Die zu verbindenden Werkstoffe können dabei in folgenden Kombinationen vorliegen:

Pulver/Pulver, Fest/Pulver, und Fest/Fest.

Gemäß einer vorteilhaften Weiterbildung der Erfindung wird als Füllstoff ein temperaturbeständiges, lösliches Salz verwendet. Dieser "Werkstoff" ist relativ preisgünstig und erlaubt auch ein einfaches Entfernen des Füllstoffes zur Freilegung des Kühlraumes. Dieser Vorteil tritt insbesondere dann hervor, wenn das Salz wasserlöslich ist, so daß keine teuren, umweltfeindlichen Lösungsmittel verwendet werden müssen, typischerweise wenn als Salz K₂SO₄ verwendet wird.

Dabei ist es zur Stabilisierung der Kontur der Grenzfläche vorteilhaft, wenn das Salz vor dem HIP-Prozeß vorverdichtet in die Kapsel eingebracht wird.

Sehr vorteilhaft läßt sich nach einer Weiterbildung ein Verfahren durchführen, bei dem das zweite Werkstoffsystem, das die Grenzfläche zu dem Füllstoff bildet, durch metallische und/oder keramische Feststoffe oder entsprechende Pulver gebildet wird. Dadurch kann das für das Formgebungswerkzeug sowohl in mechanischer als auch in thermischer Hinsicht optimale Werkstoff-System vorgegeben werden.

Ausgehend von dem eingangs bezeichneten, mit mindestens einem Kühlkanal versehenen, betrieblich thermisch belasteten Formgebungswerkzeug wird die gestellte Aufgabe vorrichtungsmäßig erfindungsgemäß dadurch gelöst, daß der Kühlkanal durch einen Hohlraum in einem durch Heißisostatisches Pressen erzeugten Verbundkörper gebildet ist.

Anhand von in der Zeichnung beschriebenen Ausführungsformen wird die Erfindung näher erläutert.

Es zeigen:
- Fig. 1: in einer schematischen Längsschnitt-Darstellung den Aufbau des späteren Formgebungswerkzeuges mit einer vakuumdicht verschließbaren Kapsel und zwei darin eingeschlossenen WerkstoffSystemen, von denen eines ein aus der Kapsel lösbarer Füll-Werkstoff ist, der beim HIP-Prozeß den späteren Kühlkanal ausfüllt,
- Fig. 2: der nach dem HIP-Prozeß endbearbeitete, das Formgebungswerkzeug bildende Verbundkörper, und
- Fig. 3: ein Formgebungswerkzeug nach dem Stand der Technik mit Kühlbohrungen.

Bei dem erfindungsgemäßen Verfahren zum Herstellen von Kühlkanälen in betrieblich thermisch belasteten Formgebungswerkzeugen, wie es sich aus den Figuren 1 und 2 ergibt, wird zunächst nach Berechnung der geforderten, ortsabhängigen Kühlleistung die Kontur und Lage des Kühlsystems innerhalb des Formgebungswerkzeuges festgelegt.

Gemäß Fig. 1 wird dabei die "Außenhaut" des Formgebungswerkzeuges zunächst durch eine Kapsel 4 vorgegeben. Die Linie 5 zeigt dabei die Kontur und Lage des berechneten Kühlsystems innerhalb der Kapsel 4. Diese Kontur 5 wird durch einen entsprechend geformten Körper 6 aus Salzpulver oder einem äquivalenten Medium, das temperaturbeständig und in Flüssigkeit löslich ist, vorgegeben. Ein solches Salz ist beispielsweise K₂SO₄.

Das Salzpulver kann dabei, wenn nötig, vorverdichtet werden, z.B. durch Pressen.

Dieser Salzkörper 6 wird danach entweder von festen und/oder pulverförmigen Werkstoffen 7 eingeschlossen. Bildet ein festes Werkstoffsystem, d.h. ein entsprechender Formkörper das Interface zum Salzpulver 6, dann braucht das Salz nicht zu einem konturgetreuen, formstabilen Körper geformt werden, weil das feste Werkstoffsystem dann durch eine entsprechende Konfigurierung die Kontur vorgeben kann.

Die Kombination aus dem Salzkörper 6 und dem Werkstoff 7 wird dann in der Kapsel 4 vakuumdicht eingeschlossen und einem HIP-Prozeß unterworfen. Die eingebrachten Werkstoffe 6,7 werden dann während des HIP-Prozesses zu einer kompakten Form unter Bildung eines Materialverbundes festgesintert.

Durch den HIP-Prozeß werden daher die einzelnen Werkstoff-Bestandteile zu einem festen Bauteil diffusionsverschweißt und damit fest verbunden.

Um dabei die vorgegebenen Abmessungen zu erreichen, müssen bei der Festlegung der Kontur entsprechende Aufmaße vorgehalten werden.

Nach dem HIP-Prozeß wird die Kapsel 4 abgearbeitet und der verbleibende Verbundkörper entsprechend der notwendigen, formgebenden Kontur des Formgebungswerkzeuges mechanisch endbearbeitet.

Das so hergestellte Formgebungswerkzeug wird dabei bodenseitig angebohrt und das Salz 6 freigelegt. Danach wird das Salz mit einschlägigen Lösungsmitteln ausgewaschen. Es besteht dadurch der gewünschte Kühlraum bzw. - kanal 8, begrenzt durch die Konturlinie 5.

Für ein Formgebungswerkzeug 1 entsprechend Fig. 3, einem Preßstempel, ist dieser Endzustand in Fig. 2 dargestellt. Wie dabei der Vergleich mit dem Stand der Technik nach Fig. 3 am Beispiel des Überganges 1a zeigt, kann die Kühlleistung auf einfache Weise ortsabhängig optimiert werden. Außerdem wird deutlich, daß mit dem erfindungsgemäßen Verfahren die Möglichkeiten, komplexe Kühlsystemgeometrien herzustellen, wesentlich verbessert werden, und zwar auf relativ einfache Weise durch Vorgabe einer entsprechenden Konturlinie 5 durch den Salzkörper.

Es versteht sich, daß der Kühlkanal 8 sowohl zur Wasser- als auch zur Luftkühlung verwendet werden kann.

## Patentansprüche

1. Verfahren zum Herstellen von Kühlkanälen in betrieblich thermisch belasteten Formgebungswerkzeugen, mit den Schritten:
- Festlegen der Kontur und Lage des Kühlsystems im Formgebungswerkzeug entsprechend der geforderten, ortsabhängigen Kühlleistung durch eine entsprechend konturierte Grenzfläche (5) zwischen mindestens zwei Werkstoffsystemen (6,7) innerhalb einer vakuumdicht verschließbaren Kapsel (4), wobei das den Raum der Kühlkanäle (8) einnehmende Werkstoffsystem (6) ein temperaturbeständiger, löslicher Füllstoff ist,
- Ausüben des Verfahrens des heißisostatischen Pressens zur Erzeugung eines Verbundkörpers innerhalb der Kapsel (4) unter lösbarem Einschließen des Füllstoffes (6),
- Bearbeiten des Verbundkörpers auf die geforderte formgebende Endkontur des Formgebungswerkzeuges, und
- Herauslösen des Füllstoffes (6) aus dem Verbundkörper unter Ausbildung des Kühlkanals (8).

2. Verfahren nach Anspruch 1, bei dem als Füllstoff (6) ein temperaturbeständiges, lösliches Salz verwendet wird.

3. Verfahren nach Anspruch 2, bei dem das Salz wasserlöslich ist.

4. Verfahren nach Anspruch 3, bei dem das Salz K₂SO₄ ist.

5. Verfahren nach einem der Ansprüche 2 bis 4, bei dem das Salz vor dem HIP-Prozeß vorverdichtet in die Kapsel (4) eingebracht wird.

6. Verfahren nach einem der Ansprüche 1 bis 5, bei dem das zweite, einen oder mehreren Werkstoffe enthaltende, Werkstoffsystem (7), das die Grenzfläche zu dem Füllstoff (6) bildet, durch metallische und/oder keramische Feststoffe oder entsprechende Pulver gebildet wird, die das Material des Formgebungswerkzeuges bilden.

7. Mit mindestens einem Kühlkanal versehenes, betrieblich thermisch belastetes Formgebungswerkzeug, **dadurch gekennzeichnet, daß** der Kühlkanal (8) durch einen Hohlraum in einem durch Heißisostatisches Pressen erzeugten Verbundkörper gebildet ist.
